# EUROPEAN PATENT SPECIFICATION

(11) **EP 3 496 768 B1**
(45) Date of publication and mention of the grant of the patent: **08.06.2022**
(21) Application number: 17840315.0
(22) Date of filing: 11.08.2017
(51) Int. Cl.: A61L 15/18, C08K 7/26, C08K 9/10

(54) **ANTIMICROBIAL COMPOSITIONS AND RELATED METHODS OF USE**
ANTIMIKROBIELLE ZUSAMMENSETZUNGEN UND ZUGEHÖRIGE VERFAHREN ZUR VERWENDUNG
COMPOSITIONS ANTIMICROBIENNES ET PROCÉDÉS D'UTILISATION ASSOCIÉS.

(30) Priority: 11.08.2016 US 201662373727 P
(43) Date of publication of application: 19.06.2019
(73) Proprietor: Imerys Filtration Minerals, Inc., San Jose, CA 95112 (US)
(72) Inventor: WANG, Bo, Union City, California 94587 (US)
(74) Representative: Haseltine Lake Kempner LLP
(86) International application number: PCT/US2017/046408
(87) International publication number: WO 2018/031843

(56) References cited:
- EP-A1- 2 238 954
- CN-A- 104 759 160
- US-A1- 2003 098 276
- US-A1- 2007 178 057
- US-A1- 2011 024 355
- US-A1- 2015 190 778
- US-A1- 2015 376 414
- US-A1- 2016 220 728
- US-B1- 6 190 674
- US-B1- 6 290 933
- US-B2- 7 250 174
- US-B2- 7 635 729
- IZQUIERDO-CANAS, PM ET AL.: 'Colloidal silver complex as an alternative to sulphur dioxide in winemaking' FOOD CONTROL vol. 23, 2012, pages 73 - 81, XP028277586
- OZYILDIZ, F ET AL.: 'Micro-encapsulation of ozonated red pepper seed oil with antimicrobial activity and application to nonwoven fabric' LETTERS IN APPLIED MICROBIOLOGY vol. 56, no. 3, 2012, pages 168 - 179, XP055359140

## Description

### Field

This disclosure is related to antimicrobial compositions, more specifically to antimicrobial compositions including at least one mineral and an antimicrobial metal compound, and related methods of use.

### BACKGROUND

In many filtration applications, a filtration device may include a filter element, such as a septum, and a filter-aid material. The filter element may be of any form such that it may support a filter-aid material. For example, the filter element may include a cylindrical tube or wafer-like structure covered with a plastic or metal fabric of sufficiently fine weave. The filter element may be a porous structure with a filter element void to allow material of a certain size to pass through the filtration device. The filter-aid material may include one or more filtration components, which, for example, may be inorganic powders or organic fibrous materials. Such a filter-aid material may be used in combination with a filter element to enhance filtration performance of a filtration device.

For example, the filter-aid material may initially be applied to a septum of a filter element in a process known as "pre-coating." Pre-coating may generally involve mixing a slurry of water and filter-aid material, and introducing the slurry into a stream flowing through the septum. During this process, a thin layer, such as, for example, about 1.5 mm to about 3.0 mm, of filter-aid material may eventually be deposited on the septum, thus pre-coating the septum.

During filtration of a fluid, various insoluble particles in the fluid may become trapped by the filter-aid material. The combined layers of filter-aid material and particles and/or constituents to be removed accumulate on the surface of the septum. Those combined layers are known as "filter cake." As more and more particles and/or constituents are deposited on the filter cake, the filter cake may become saturated with debris to the point where fluid is no longer able to pass through the septum.

To combat this situation, a process known as "body feeding" may be used. Body feeding is the process of introducing additional filter-aid material into the fluid to be filtered before the fluid reaches the filter cake. The filter-aid material will follow the path of the unfiltered fluid and will eventually reach the filter cake. Upon reaching the filter cake, the added filter-aid material will bind to the cake in a similar manner to how the filter-aid material is bound to the septum during the pre-coating process. The additional layer of filter-aid material may cause the filter cake to swell and thicken, and may increase the capacity of the filter cake to entrap additional debris. The filter aid typically has an open porous structure, which maintains an open structure in the filter cake, thus ensuring continued permeability of the filter cake.

In the field of fluid filtration, diatomaceous earth and minerals such as perlite are commonly employed as filter aids. Diatomaceous earth products may be obtained from diatomaceous earth (also called "DE" or "diatomite"), which is generally known as a sediment-enriched in biogenic silica (i.e., silica produced or brought about by living organisms) in the form of siliceous skeletons (frustules) of diatoms. Diatoms are a diverse array of microscopic, single-celled, golden-brown algae generally of the class Bacillariophyceae that possess an ornate siliceous skeleton of varied and intricate structures including two valves that, in the living diatom, fit together much like a pill box.

Diatomaceous earth may form from the remains of water-borne diatoms and, therefore, diatomaceous earth deposits may be found close to either current or former bodies of water. Those deposits are generally divided into two categories based on source: freshwater and saltwater. Freshwater diatomaceous earth is generally mined from dry lakebeds and may be characterized as having a low crystalline silica content and a high iron content. In contrast, saltwater diatomaceous earth is generally extracted from oceanic areas and may be characterized as having a high crystalline silica content and a low iron content.

In the field of filtration, methods of particle separation from fluids may employ diatomaceous earth products or glass products as filter aids. The intricate and porous structure unique to diatomaceous earth may, in some instances, be effective for the physical entrapment of particles in filtration processes. It is known to employ diatomaceous earth products to improve the clarity of fluids that exhibit "turbidity" or contain suspended particles or particulate matter. Turbidity is the cloudiness or haziness of a fluid, where the haze may be caused by individual particles that are suspended in the fluid. Materials that may cause a fluid to be turbid include, for example, clay, silt, organic matter, inorganic matter, and microscopic organisms. EP 2238954 A1 relates to a bonded fibrous material web of cellulose material that is made of a layer of cellulose fibers that are press-bonded in sections of the fibrous material web. CN 104759160 A relates to a composite filter material used in sewage treatment which is prepared by blending melt-blown polypropylene with nano carbon fiber. US 2011/024355 A1 relates to the preparation of antimicrobial membranes by inclusion of low leaching, control release silver - based antimicrobial additives into a polymer matrix and forming a semipermeable membrane. US 2016/220728 A1 relates to compositions having antimicrobial activity containing surface functionalized particles comprising an inorganic copper salt which has low water solubility. US 7635729 B2 relates to zinc oxide and zinc carbonate coated particles and their use in various applications.

Existing filters may be costly and/or ineffective at removing all microscopic organisms from a fluid. Additionally, cleansing compositions may include various additives to improve the ability of those cleansing compositions to clean various surfaces. However, certain additives may not be effective at reducing undesirable microscopic organisms after use.

Thus, it may be desirable to provide compositions that assist with removing or killing microscopic organisms. That is, it may be desirable to provide compositions that assist with reducing or killing undesirable germs and bacteria.

### SUMMARY

It is to be understood that both the foregoing general description and the following detailed description are exemplary and explanatory only and are not restrictive of the disclosure, as claimed. The present invention is defined in and by the appended claims.

In accordance with a first aspect of the present invention, there is provided a composite filter aid comprising a mineral associated with an antimicrobial metal compound, wherein the filter aid has a permeability ranging from 9.87 × 10⁻¹⁴ m² to 1.97 × 10⁻¹¹ m² (0.1 to 20 darcys), further wherein the mineral includes one or more of diatomaceous earth and perlite.

The filter aid may have a permeability ranging from 9.87 × 10⁻¹⁴ m² - 2.96 × 10⁻¹³ m² (0.1 - 0.3 Darcys), 2.96 × 10⁻¹³ m² - 4.93 × 10⁻¹³ m² (0.3 - 0.5 Darcys), 4.93 × 10⁻¹³ m² - 9.87 × 10⁻¹³ m² (0.5 to 1.0 Darcys), 9.87 × 10⁻¹³ m² to 1.97 × 10⁻¹² m² (1 to 2 darcys), from 1.97 × 10⁻¹² m² to 1.97 × 10⁻¹¹ m² (2 to 20 darcys), from 1.97 × 10⁻¹² m² to 9.87 × 10⁻¹² m² (2 to 10 darcys), or from 1.97 × 10⁻¹² m² to 4.93 × 10⁻¹² m² (2 to 5 darcys). A ratio of the antimicrobial metal compound to the mineral may range from 1:1000 to 1:4 by weight, from 1:100 to 1:5 by weight, from 1:100 to 1:10 by weight, from 1:20 to 1:5 by weight, or from 1:20 to 3:20 by weight.

The antimicrobial metal compound may include at least one of zinc, copper, and silver. The antimicrobial metal compound may include zinc oxide. The antimicrobial metal compound may include antimicrobial metal compound particles, and the antimicrobial metal compound particles may be attached to a surface of the mineral. The antimicrobial metal compound particles may have a particle size less than 200 nm, less than 150 nm, less than 100 nm, less than 50 nm, less than 25 nm, less than 20 nm, less than 15 nm, less than 10 nm, or less than 5 nm.

The mineral may include diatomaceous earth. The diatomaceous earth may be obtained from a freshwater source. The diatomaceous earth may be obtained from a saltwater source. The diatomaceous earth may have a d₁₀ ranging from 3 µm to 20 µm. The diatomaceous earth may have a median particle size (d₅₀) ranging from 10 µm to 50 µm. The diatomaceous earth may have a top particle size (d₉₀) ranging from 30 µm to 120 µm. The diatomaceous earth may have a pore volume ranging from about 2 ml/g to about 8 ml/g. The diatomaceous earth may have a median pore diameter ranging from about 1 µm to about 8 µm. The diatomaceous earth may have a bulk density ranging from about 64 kg/m³ (about 4 lb/ft³) to about 240 kg/m³ (about 15 Ib/ft³). The diatomaceous earth may be non-calcined, calcined, or flux-calcined.

The mineral may include at least one of perlite, volcanic ash, pumice, shirasu, obsidian, pitchstone, and rice hull ash. The mineral may be perlite. The perlite may include expanded perlite. The perlite may include milled, expanded perlite. The perlite may include unexpanded perlite. The perlite may have an embodiment ratio of 1:1 to 1:50. The perlite may have an embodiment ratio of 1:2 to 1:35. The mineral may also include at least one of kaolin, talc, vermiculite, mica, and wollastonite.

The filter aid may have a pore volume ranging from about 2 ml/g to about 8 ml/g. The filter aid may have a median pore diameter ranging from 1 µm to about 8 µm. The filter aid may have a d₁₀ ranging from 5 µm to 30 µm. The filter aid may have a median particle size (d₅₀) ranging from 10 µm to 70 µm. The filter aid may have a top particle size (d₉₀) ranging from 80 µm to 120 µm. The filter aid may have a wet density ranging from about 192 kg/m³ (about 12 lb/ft³) to about 400 kg/m³ (about 25 Ib/ft³). The filter aid may have a bulk density ranging from about 80 kg/m³ (about 5 lb/ft³) to about 224 kg/m³ (about 14 Ib/ft³). The filter aid may have a beer soluble iron content of less than 5 ppm, as measured by ASBC, or less than 1 ppm, as measured by ASBC. The filter aid may have a cristobalite content of less than 20 percent by weight, less than 10 percent by weight, less than 6 percent by weight, or less than 1 percent by weight. The filter aid may have a BET surface area ranging from 1 m²/g to about 50 m²/g.

A method may include filtering a fluid with the filter aid as set forth above. The fluid may be a beverage. The beverage may be beer, wine, or juice. The fluid may be oil. The oil may be edible oil or biodiesel. In accordance with a second aspect, there is provided a method of filtering a fluid with the filter aid in accordance with the first aspect of the present invention, for example wherein the fluid is a beverage such as beer, wine, or juice, or wherein the fluid is oil such as edible oil or biodiesel.

The present disclosure is directed to a method of filtering a fluid with an antimicrobial filter aid. The method includes passing the fluid through a filter containing the antimicrobial filter aid, and the antimicrobial filter aid includes a mineral associated with an antimicrobial metal compound. This method may include any of the features set forth above with respect to the composite filter aid.

The fluid may be a beverage. The beverage may be beer, wine, or juice. The method may remove or eliminate lactic acid bacteria from the beer, wine, or juice. The fluid may be oil. The oil may be edible oil or biodiesel. The lactic acid bacteria can be selected from any of *Oenococcus oeni,* and various species of *Lactobacillus* and *Pediococcus.*

There is also described herein a method of filtering a fluid. The method may include simultaneously removing particulate from the fluid and reducing micro-organism content of the fluid. This method may include any of the features set forth above with respect to the composite filter aid.

The fluid may be a beverage. The beverage may be beer, wine, or juice. The method may remove or eliminate lactic acid bacteria from the beer, wine, or juice. The fluid may be oil. The oil may be edible oil or biodiesel. The micro-organism content may be lactic acid bacteria content.

There is also described herein a composition including a mineral selected from one of diatomaceous earth, talc, wollastonite, kaolin, and bentonite, and an antimicrobial metal compound associated with the mineral. This composition may include any of the features set forth above with respect to the various disclosed minerals and antimicrobial metal compounds.

The composition may be a personal care composition, a cosmetic composition, or a cleaning composition. The composition may be an exfoliating cleansing composition. The composition may be a shower gel or bath gel. The composition may be a hair shampoo. The hair shampoo may be an anti-dandruff shampoo. The composition may be an exfoliating cosmetic composition. The composition may be a paint composition. The composition may be a polymer filler. The composition may be a dentrifice composition. The dentifrice composition may exhibit an RDA value less than 200, or less than 150. The dentifrice composition may exhibit a PCR value of at least 80, at least 100, or at least 120. The composition may include a toothpaste base. The toothpaste base may include at least one of binders, humectants, abrasives, detergents, flavoring agents, and preventatives.

There is also described herein a sunscreen composition including a mineral selected from one of diatomaceous earth, talc, wollastonite, kaolin, bentonite, calcium carbonate, mica, and perlite, and zinc oxide associated with the mineral, wherein a ratio of the zinc oxide to the mineral is at least 1:1 by weight. This sunscreen composition may include any of the features set forth above with respect to the various disclosed minerals and zinc oxide.

The ratio of the zinc oxide to the mineral ranges from 1:1 to 9:1 by weight, from 1:1 to 4:1 by weight, from 3:2 to 4:1 by weight or from 3:2 to 3:1 by weight. The mineral may be talc. The talc may be delaminated. The talc may have a BET surface area of least about 10.0 m²/g. The talc may have a lamellarity index of at least about 3.0. The talc may have a lamellarity index of at least about 4.0. The talc may be uncoated. The sunscreen composition may include one or more emollients, emulsifiers, hydrants, thickeners and/or surfactants. The composition may be a cream, ointment, lotion, or in sprayable form. The sunscreen composition may have a SPF of at least about 6.0.

### BRIEF DESCRIPTION OF THE DRAWINGS

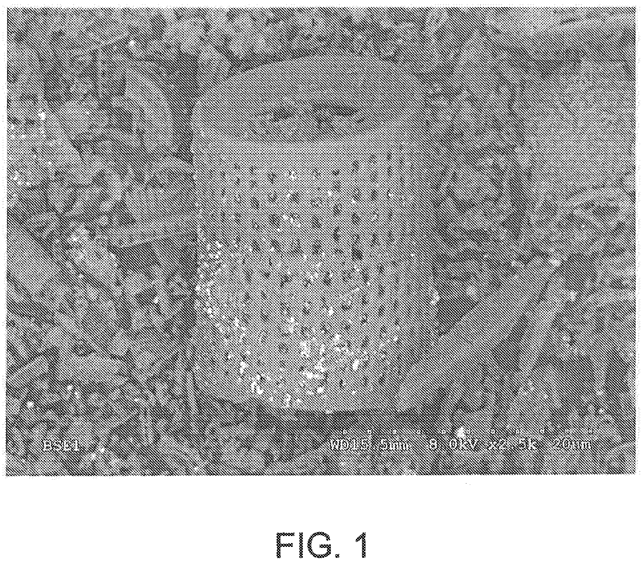

Fig. 1 is a scanning electron micrograph of a sample of an exemplary embodiment of zinc oxide treated diatomaceous earth. The bright small particles are the nano zinc oxide particles deposited on the DE surface.

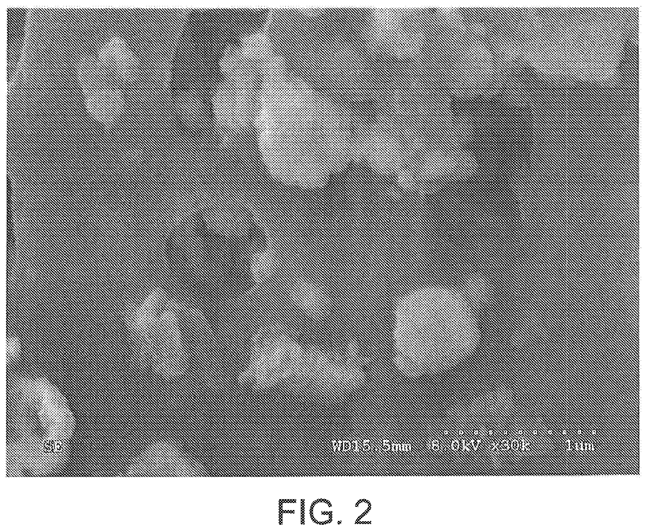

Fig. 2 is another scanning electron micrograph of a sample of an exemplary embodiment of zinc oxide treated diatomaceous earth. The bright particles are the nano zinc oxide particles deposited on the DE surface.

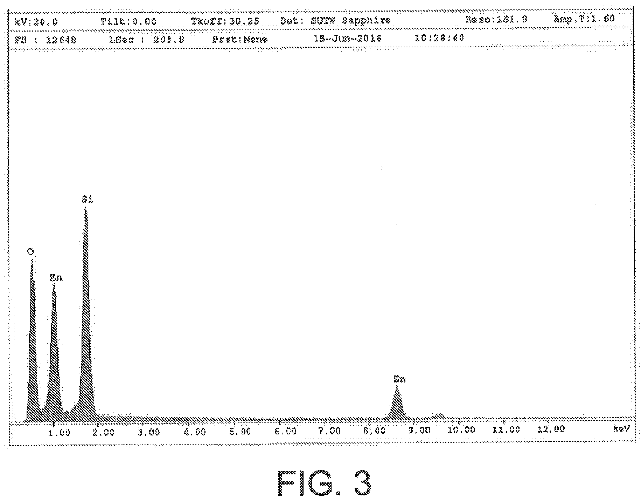

Fig. 3 is a graph of an energy-dispersive x-ray spectrum of an exemplary embodiment of zinc oxide treated diatomaceous earth. The Zn peak in the spectrum confirms nano ZnO particles deposited on the DE surface.

### DESCRIPTION OF EXEMPLARY EMBODIMENT

Particular embodiments of the present disclosure are described in greater detail below. The terms and definitions provided herein control, if in conflict with terms and/or definitions incorporated by reference.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 5 percent of a specified amount or value.

Compositions of the present disclosure include a mineral and an antimicrobial compound associated with the mineral. The mineral may include one or more of diatomaceous earth, perlite, mica, talc, clay, kaolin, smectite, wollastonite, bentonite, and calcium carbonate, provided that the mineral includes one or more of diatomaceous earth and perlite, and the antimicrobial compound is an antimicrobial metal compound, such as, e.g., zinc oxide, although other suitable antimicrobial metal compounds, discussed in further detail below, also are contemplated.

### Diatomaceous earth

In some embodiments, the at least one diatomaceous earth is obtained from a saltwater source. In some embodiments, the at least one diatomaceous earth is obtained from a freshwater source. In further embodiments, the at least one diatomaceous earth is any diatomaceous earth material that may be capable of use in composite material such as a composite filter aid, either in its crude form or after subjecting the material to one or more processing steps. In some embodiments, the at least one diatomaceous earth is any diatomaceous earth material that has not been subjected to at least one thermal treatment. In still other embodiments, the at least one diatomaceous earth is any diatomaceous earth material that has not been subjected to calcination. Average particle size for the diatomaceous earth can range from 5 to 200 µm, surface area ranges from 1 to 80 m²/g, pore volume ranges from 1 to 10 L/mg with median pore size from 1 to 20 µm.

According to some embodiments, the diatomaceous earth is any diatomaceous earth material that has been subjected to at least one thermal treatment. In still other embodiments, the diatomaceous earth is any diatomaceous earth material that has been subjected to calcination, for example, being either non-flux calcined or flux-calcined.

According to some embodiments, the diatomaceous earth material has not been subjected to thermal treatment (e.g., calcination) sufficient to induce formation of greater than 1 percent cristobalite.

As stated earlier, diatomaceous earth is, in general, a sedimentary biogenic silica deposit including the fossilized skeletons of diatoms, one-celled algae-like plants that accumulate in marine or fresh water environments. Honeycomb silica structures generally give diatomaceous earth useful characteristics such as absorptive capacity and surface area, chemical stability, and low-bulk density. In some embodiments, diatomaceous earth includes about 90 percent SiO₂ mixed with other substances. In some embodiments, crude diatomaceous earth includes about 90 percent SiO₂, plus various metal oxides, such as, but not limited to, AI-, Fe-, Ca-, and Mg-oxides.

The at least one diatomaceous earth may have any of various appropriate forms now known to the skilled artisan or hereafter discovered. In some embodiments, the at least one diatomaceous earth is unprocessed (e.g., it is not subjected to chemical and/or physical modification processes). Without wishing to be bound by theory, the impurities in diatomaceous earth, such as clays and organic matters, may, in some instances, provide higher cation exchange capacity. In some embodiments, the at least one diatomaceous earth undergoes minimal processing following mining or extraction. In some embodiments, the at least one diatomaceous earth is subjected to at least one physical modification process. Some examples of possible physical modification processes include, but are not limited to, milling, drying, and air classifying. In some embodiments, the at least one diatomaceous earth is subjected to at least one chemical modification process. An example of a chemical modification processes is silanization, but other chemical modification processes are contemplated. Silanization may be used to render the surfaces of the at least one diatomaceous earth either more hydrophobic or hydrophilic using the methods appropriate for silicate minerals. The diatomaceous earth may have a typical median particle size (d₅₀) ranging from about 10 µm to about 30 µm, or from about 20 µm to about 50 µm, may have a pore volume ranging from about 2 mL/g to about 8 mL/g, or from about 3 mL/g to about 5 mL/g, may have a median pore size ranging from about 1 µm to about 8 µm, or from about from about 2 µm to about 6 µm, may have a surface area ranging from about 1 m²/g to about 40 m²/g, and/or may have a bulk density ranging from about 64 kg/m³ (about 4 Ibs/ft³) to about 240 kg/m³ (about 15 Ibs/ft³). The diatomaceous earth may have a top particle size (d₉₀) ranging from about 60 µm to about 120 µm, and a (d₁₀) particle size from about 5 µm to about 20 µm.

### Other Minerals

Other minerals suitable for use in filtration include, for example, perlite, pumice, pumicite, shirasu, obsidian, rice hull ash, and pitchstone. Prior to processing, perlite may be gray to green in color with abundant spherical cracks that cause it to break into small pearl-like masses. Pumice is a lightweight glassy vesicular rock. Obsidian may be dark in color with a vitreous luster and a characteristic conchoidal fracture. Pitchstone has a waxy resinous luster and may be brown, green, or gray. Volcanic glasses such as perlite and pumice occur in massive deposits and find wide commercial use. Volcanic ash, often referred to as "tuff" when in consolidated form, includes small particles or fragments that may be in glassy form. Some minerals may be chemically equivalent to rhyolite. Other natural glasses may be chemically equivalent to trachyte, dacite, andesite, latite, and basalt. The term "obsidian" is generally applied to large numbers of natural glasses that are rich in silica. Obsidian may be classified into subcategories according to their silica content, with rhyolitic obsidians (containing typically about 73 percent SiO₂ by weight) being the most common.

Perlite is a hydrated mineral that may contain, for example, about 72 to about 75 percent SiO₂, about 12 to about 14 percent Al₂O₃, about 0.5 to about 2 percent Fe₂O₃, about 3 to about 5 percent Na₂O, about 4 to about 5 percent K₂O, about 0.4 to about 1.5 percent CaO (by weight), and small amounts of other metallic elements. Perlite may be distinguished from other minerals by a higher content (such as about 2 to about 5 percent by weight) of chemically-bonded water, the presence of a vitreous, pearly luster, and characteristic concentric or arcuate onion skin-like (i.e., perlitic) fractures.

Perlite products may be prepared by milling and thermal expansion, and may possess unique physical properties such as high porosity, low bulk density, and chemical inertness. Average particle size for the milled expanded perlite ranges from 5 to 200 µm, pore volume ranges from 2 to 10 L/mg with median pore size from 5 to 20 µm, although other suitable values, set forth below, are also contemplated.

Perlite particles having a size greater than about 50 µm tend to be generally three-dimensional, multi-angular particles. In contrast, fine perlite particles from the fine fraction of the classified product having a size less than about 50 µm tend to be generally two-dimensional and relatively more platy than the larger particles. Thus, perlite particles (e.g., expanded perlite particles) having a size greater than about 50 µm may be more abrasive than particles having a smaller size. Further, smaller, platy particles may break down to even smaller particles more easily during, for example, a cleaning process.

According to some exemplary embodiments, perlite, for example, commercially-available perlites such as expanded perlite, may be milled and classified, such that the milled and classified perlite has a top particle size (d₉₀) less than 50 µm. For example, an un-classified, expanded perlite having a top particle size (d₉₀) of 112 µm, a median particle size (d₅₀) of 60 µm, and a (d₁₀) particle size of 22 µm may be milled and/or classified according to methods known to those skilled in art to obtain perlite having a top particle size (d₉₀) less than 50 µm. A particle size designated "top particle size (d₉₀)" is defined as the size for which 90 percent of the volume of the particles is smaller than the indicated size. A particle size designated "median particle size (d₅₀)" is defined as the size for which 50 percent of the volume of the particles is smaller than the indicated size. According to some exemplary embodiments, the milled and/or classified perlite (e.g., expanded perlite) may have a median particle size (d₅₀) less than 30 µm. For example, the perlite may have a median particle size (d₅₀) less than 25 µm, such as, for example, a median particle size (d₅₀) less than 20 µm. Some embodiments have a median particle size (d₅₀) ranging from 5 µm to 25 µm, such as, for example, from 10 µm to 20 µm. In yet other examples, perlite may have a typical median particle size (d₅₀) ranging from about 20 µm to about 70 µm, a pore volume ranging from about 3 mL/g to about 8 mL/g, a median pore size ranging from about 10 µm to about 30 µm, a surface area ranging from about 1 m²/g to about 10 m²/g, a bulk density ranging from about 32 kg/m³ (about 2 Ibs/ft³) to about 96 kg/m³ (about 6 Ibs/ft³).

In some embodiments, the expanded perlite may have an embodiment ratio of about 1:1 to about 1:50, about 1:2 to about 1:35, or about 1:5 to about 1:20. Embodiment ratios can be calculated by the Sphericity Model from experimentally determined (using electron microscopy) surface area data as described in U.S. Pat. No. 5,846,309.

Pumice is a mineral characterized by a mesoporous structure (e.g., having pores or vesicles with a size up to about 1 mm). The porous nature of pumice gives it a very low apparent density, in many cases allowing it to float on the surface of water. Most commercial pumice contains from about 60 percent to about 70 percent SiO₂ by weight. Pumice may be processed by milling and classification, and pumice products may be used as lightweight aggregates and also as abrasives, adsorbents, and fillers. Unexpanded pumice and thermally-expanded pumice may also be used as filtration components.

### Other Minerals

Other minerals that may be used in the compositions of the present disclosure include mica, talc, clay, kaolin, smectite, wollastonite, bentonite, and calcium carbonate. For example, mica is a mineral having a layered or platy texture. Mica may occur in igneous, metamorphic, and sedimentary regimes. Large crystals of mica may be typically mined from granitic pegmatites. Mica may have a median particle size ranging from, for example, about 20 µm to about 60 µm, and/or may have an embodiment ratio ranging from, for example, about 1:20 to about 1:60.

### Antimicrobial Compounds

According to some embodiments, to add antimicrobial properties to the composition, an antimicrobial metal compound (e.g., a nano-antimicrobial metal compound) may be precipitated and attached to the mineral surface to form an antimicrobial composition. According to some embodiments, the antimicrobial compositions may include at least one of zinc, copper, silver, and/or any other metal compounds known to those skilled in the art as having antimicrobial properties. For example, the antimicrobial metal compound may include zinc oxide, for example, a nano-sized zinc oxide ("nano zinc oxide"). According to some embodiments, the antimicrobial metal compound may range from 1 percent to 30 percent by weight of the antimicrobial composition. For example, the antimicrobial metal compound may range from 1 percent to 20 percent by weight of the antimicrobial composition, from 1 percent to 10 percent by weight of the antimicrobial composition, or from 1 percent to 5 percent by weight of the antimicrobial composition. According to some embodiments, the nano-antimicrobial particles precipitated and attached to the mineral surface may range from 1 nanometer (nm) to 250 nm.

In some embodiments of the present disclosure, a ratio of the antimicrobial metal compound to the mineral ranges from 1:1000 to 1:4 by weight, from 1:100 to 1:5 by weight, from 1:100 to 1:10 by weight, from 1:20 to 1:5 by weight, from 1:20 to 3:20 by weight, or is in another suitable range.

The antimicrobial metal compound particles may have a particle size less than 250 nm, less than 200 nm, less than 150 nm, less than 100 nm, less than 50 nm, less than 25 nm, less than 20 nm, less than 15 nm, less than 10 nm, or less than 5 nm.

### Binder

The various minerals described above may be subjected to at least one co-agglomeration with at least one binder. For example, in some embodiments, the binder is at least one alkali silicate binder. In some embodiments, the binder is at least one of sodium silicate and potassium silicate. In some embodiments, the binder is at least one of alkali carbonate as the flux for high temperature calcination. In some embodiments, the binder is at least one of sodium carbonate and potassium carbonate.

According to another embodiment, the binder may include at least one of an inorganic binder, an organic binder, or an organic-to-inorganic binder.

According to one embodiment, the binder can include an inorganic binder such as an alkali silicate, such as, for example, sodium silicate, potassium silicate, and mixtures thereof. According to another embodiment, the inorganic binder may include a cement, such as a calcium aluminate cement. In another embodiment, the inorganic binder may include a cement such as a calcium phosphate cement, a magnesium phosphate cement. In another embodiment, the inorganic binder may include a magnesium aluminum silicate clay.

According to another embodiment, the binder can include an organic-to-inorganic binder such as a silicone or ethyl silicate.

According to a further embodiment, the binder can include one or more organic binders or biopolymers. For example, the binder can include a cellulose, polyethylene glycol (PEG), polyvinyl alcohol (PVA), polyvinylpyrrolidone (PVP), starch, Candalilla wax, a polyacrylate or related copolymer (e.g., acrylic acid-acrylamide, etc.), a polydiallyldimethylammonium chloride polymer or copolymer (pDADMAC, etc.), dextrin, lignosulfonate, sodium alginate, magnesium stearate, or mixtures thereof.

### Co-Agglomeration

Co-agglomeration of a first mineral, such as, diatomaceous earth material and/or other filtration minerals, a second mineral, and a binder, or of heat-treated diatomaceous earth and/or heat-treated perlite, a second mineral, and a binder (e.g., a silica binder), may occur through any appropriate agglomeration processes now known to the skilled artisan or hereafter discovered. For example, in some embodiments, co-agglomeration includes preparing at least one aqueous solution of the binder, and contacting the binder solution with a blend of the first mineral and the second mineral. One or more agglomerations may be performed, for example, when multiple binders, multiple first minerals, and/or multiple second minerals are used.

In some embodiments, contacting includes mixing the binder solution with a blend of the first and second minerals. In some embodiments, the mixing includes agitation. In some embodiments, the blend of the first mineral, the second mineral, and the binder solution is mixed sufficiently to at least substantially uniformly distribute the binder solution among the agglomeration points of contact of the first and second minerals. In some embodiments, the blend of the first and second minerals and the binder solution is mixed with sufficient agitation to at least substantially uniformly distribute the binder solution among the agglomeration points of contact of the blend of first and second minerals without damaging the structure of the diatomaceous earth or perlite. In some embodiments, the contacting includes low-shear mixing.

In some embodiments, mixing occurs for about one hour. In other embodiments, mixing occurs for less than about one hour. In further embodiments, mixing occurs for about 30 minutes. In yet other embodiments, mixing occurs for about 20 minutes. In still further embodiments, mixing occurs for about 10 minutes.

In some embodiments, mixing occurs at about room temperature (i.e., from about 20°C to about 23°C). In other embodiments, mixing occurs at a temperature ranging from about 20°C to about 50°C. In further embodiments, mixing occurs at a temperature ranging from about 30°C to about 45°C. In still other embodiments, mixing occurs at a temperature of from about 35°C to about 40°C.

According to some embodiments, contacting includes spraying the blend of first and second minerals with at least one binder solution. In some embodiments, the spraying is intermittent. In other embodiments, the spraying is continuous. In further embodiments, spraying includes mixing the blend of the first and second minerals while spraying with at least one binder solution, for example, to expose different agglomeration points of contacts to the spray. In some embodiments, such mixing is intermittent. In other embodiments, such mixing is continuous.

In some embodiments, the at least one binder is present in the binder solution in an amount less than about 40 percent by weight, relative to the weight of the at least one binder solution. In some embodiments, the at least one binder ranges from about 1 percent to about 10 percent by weight. In further embodiments, the at least one binder ranges from about 1 percent to about 5 percent by weight.

The at least one aqueous solution of the at least one binder may be prepared with water. In some embodiments, the water is deionized water. In some embodiments, the water is ultrapure water. In further embodiments, the water has been treated to remove or decrease the levels of metals, toxins, and/or other undesirable elements before it is contacted with the at least one binder.

The amount of at least one aqueous solution contacted with the blend of the first and second minerals may range from about 0.25 parts to about 1.5 parts of aqueous solution to one part blend. In some embodiments, about 1 part aqueous solution is contacted with about 1 part blend.

### Classification

Before and/or after the agglomeration, the first and/or second minerals may be subjected to at least one classification step. For example, before and/or after at least one heat treatment, diatomaceous earth may, in some embodiments, be subjected to at least one classification step. In some embodiments, the particle size of the diatomaceous earth material and/or perlite may be adjusted to a suitable or desired size using any one of several techniques well known in the art. In some embodiments, the first and/or second minerals may be subjected to at least one mechanical separation to adjust the powder size distribution. Appropriate mechanical separation techniques are well known to the skilled artisan and include, but are not limited to, milling, grinding, screening, extrusion, triboelectric separation, liquid classification, aging, and air classification.

### Heat Treatment

The first and/or second minerals and/or co-agglomerated minerals may be subjected to at least one heat treatment. Appropriate heat treatment processes are well-known to the skilled artisan and include those now known or that may hereinafter be discovered. In some embodiments, the at least one heat treatment decreases the amount of organics and/or volatiles in the heat-treated first and/or second minerals. In some embodiments, the at least one heat treatment includes at least one calcination. In some embodiments, the at least one heat treatment includes at least one flux calcination. In some embodiments, the at least one heat treatment includes at least one roasting.

Calcination may be conducted according to any appropriate process now known to the skilled artisan or hereafter discovered. In some embodiments, calcination is conducted at temperatures below the melting point of the first and/or second minerals. In some embodiments, calcination is conducted at a temperature ranging from about 600°C to about 1100°C. In some embodiments, the calcination temperature ranges from about 600°C to about 700°C. In some embodiments, the calcination temperature ranges from about 700°C to about 800°C. In some embodiments, the calcination temperature ranges from about 800°C to about 900°C. In some embodiments, the calcination temperature is chosen from the group consisting of about 600°C, about 700°C, about 800°C, about 900°C, about 1000°C, and about 1100°C. Heat treatment at a lower temperature may result in an energy savings over other processes for the preparation of the first and/or second minerals.

Flux calcination includes conducting at least one calcination in the presence of at least one fluxing agent. Flux calcination may be conducted according to any appropriate process now known to the skilled artisan or hereafter discovered. In some embodiments, the at least one fluxing agent is any material now known to the skilled artisan or hereafter discovered that may act as a fluxing agent. In some embodiments, the at least one fluxing agent is a salt including at least one alkali metal. In some embodiments, the at least one fluxing agent is chosen from the group consisting of carbonate, silicate, chloride, and hydroxide salts. In other embodiments, the at least one fluxing agent is chosen from the group consisting of sodium, potassium, rubidium, and cesium salts. In still further embodiments, the at least one fluxing agent is chosen from the group consisting of sodium, potassium, rubidium, and cesium carbonate salts.

Roasting may be conducted according to any appropriate process now known to the skilled artisan or hereafter discovered. In some embodiments, roasting is a calcination process conducted at a generally lower temperature that helps to avoid formation of crystalline silica in, for example, the diatomaceous earth and/or perlite. In some embodiments, roasting is conducted at a temperature ranging from about 450°C to about 900°C. In some embodiments, the roasting temperature ranges from about 500°C to about 800°C. In some embodiments, the roasting temperature ranges from about 600°C to about 700°C. In some embodiments, the roasting temperature ranges from about 700°C to about 900°C. In some embodiments, the roasting temperature is chosen from the group consisting of about 450°C, about 500°C, about 600°C, about 700°C, about 800°C, and about 900°C.

According to some embodiments, the first and/or second minerals may be subjected to at least one heat treatment, followed by co-agglomerating the heat-treated first and/or second minerals with at least one binder.

### Filtration

Embodiments of the present disclosure include filtration devices and compositions having antimicrobial capability and methods of use thereof.

A filtration device may include a filter element, such as a septum, and a filter-aid material. The composite filter aid or composite material made by the processes described herein may have one or more beneficial attributes, making them desirable for use in one or a number of given applications. In some embodiments, the composite filter aids or composite materials may be useful as part of a filter aid composition. In some embodiments, a filter aid composition may include at least one composite material.

The composite filter aids disclosed herein may have a permeability suitable for use in a filter aid composition. Permeability may be measured by any appropriate measurement technique now known to the skilled artisan or hereafter discovered. Permeability is generally measured in darcy units or darcy, as determined by the permeability of a porous bed 1 cm high and with a 1 cm² section through which flows a fluid with a viscosity of 1 mPa•s with a flow rate of 1 cm³/sec under an applied pressure differential of 1 atmosphere. The principles for measuring permeability have been previously derived for porous media from Darcy's law (see, for example, J. Bear, "The Equation of Motion of a Homogeneous Fluid: Derivations of Darcy's Law," in Dynamics of Fluids in Porous Media 161-177 (2nd ed. 1988)). An array of devices and methods are in existence that may correlate with permeability. In one exemplary method useful for measuring permeability, a specially constructed device is designed to form a filter cake on a septum from a suspension of filtration media in water; and the time required for a specified volume of water to flow through a measured thickness of filter cake of known cross-sectional area is measured.

The composite material has a permeability ranging from about 9.87 × 10⁻¹⁴ m² (about 0.1 darcys) to about 1.97 × 10⁻¹¹ m² (about 20 darcys). In some embodiments, the composite material has a permeability ranging from about 9.87 × 10⁻¹⁴ m² to 4.93 × 10⁻¹³ m² (about 0.1 darcys to 0.5 darcys). In some embodiments, the composite material has a permeability ranging from about 4.93 × 10⁻¹³ m² to 1.97 × 10⁻¹² m² (about 0.5 darcys to 2 darcys). In some embodiments, the composite material has a permeability ranging from about 1.97 × 10⁻¹² m² to about 1.97 × 10⁻¹¹ m² (about 2 darcys to about 20 darcys). In some embodiments, permeability ranges from about 1.97 × 10⁻¹² m² to about 9.87 × 10⁻¹² m²) (about 2 darcys to about 10 darcys). In some embodiments, the permeability ranges from about 1.97 × 10⁻¹² m² to about 4.93 × 10⁻¹² m² (about 2 darcys to about 5 darcys).

In some embodiments, the d₁₀ of the composite material ranges from about 5 µm to about 30 µm. In some embodiments, the d₁₀ ranges from about 15 µm to about 30 µm. In some embodiments, the d₁₀ ranges from about 20 µm to about 30 µm. In some embodiments, the d₅₀ of the composite material ranges from about 10 µm to about 70 µm. In some embodiments, the d₅₀ ranges from about 20 µm to about 50 µm. In some embodiments, the d₅₀ ranges from about 50 µm to about 70 µm. In some embodiments, the d₅₀ ranges from about 60 µm to about 70 µm. In some embodiments, the d₉₀ of the composite material ranges from about 60 µm to about 120 µm. In some embodiments, the d₉₀ ranges from about 90 µm to about 120 µm. In some embodiments, the d₉₀ ranges from about 100 µm to about 120 µm. In some embodiments, the d₉₀ ranges from about 110 µm to about 120 µm.

The composite materials disclosed herein may have a low crystalline silica content. Forms of crystalline silica include, but are not limited to, quartz, cristobalite, and tridymite. In some embodiments, the composite material has a lower content of at least one crystalline silica than a composite material not subjected to at least one co-agglomeration with at least one silica binder.

The composite materials disclosed herein may have a low cristobalite content. Cristobalite content may be measured by any appropriate measurement technique now known to the skilled artisan or hereafter discovered. In one exemplary method, cristobalite content is measured by X-ray diffraction. Cristobalite content may be measured, for example, by the quantitative X-ray diffraction method outlined in H. P. Klug and L. E. Alexander, X-Ray Diffraction Procedures for Polycrystalline and Amorphous Materials 531-563 (2nd ed. 1972). According to one example of that method, a sample is milled in a mortar and pestle to a fine powder, then back-loaded into a sample holder. The sample and its holder are placed into the beam path of an X-ray diffraction system and exposed to collimated X-rays using an accelerating voltage of 40 kV and a current of 20 mA focused on a copper target. Diffraction data are acquired by step-scanning over the angular region representing the interplanar spacing within the crystalline lattice structure of cristobalite, yielding the greatest diffracted intensity. That region ranges from 21 to 23 2θ (2-theta), with data collected in 0.05 2θ steps, counted for 20 seconds per step. The net integrated peak intensity is compared with those of standards of cristobalite prepared by the standard additions method in amorphous silica to determine the weight percent of the cristobalite phase in a sample.

In some embodiments, the cristobalite content is less than about 20 percent by weight, less than about 10 percent by weight, less than about 6 percent by weight, or less than about 1 percent by weight. In some embodiments, the composite material has a lower cristobalite content than materials not subjected to co-agglomeration with, for example, a perlite and/or a second mineral, and at least one binder (e.g., at least one silica binder).

Composite materials disclosed herein may have a low quartz content. Quartz content may be measured by any appropriate measurement technique now known to the skilled artisan or hereafter discovered. In one exemplary method, quartz content is measured by x-ray diffraction. For example, quartz content may be measured by the same x-ray diffraction method described above for cristobalite content, except the that 2θ region ranges from 26.0 to 27.5 degrees. In some embodiments, the quartz content is less than about 0.5 percent by weight, less than about 0.25 percent by weight, less than about 0.1 percent by weight, or is about 0 percent by weight. In some embodiments, the quartz content ranges from about 0 percent to about 0.5 percent by weight. In some embodiments, the quartz content ranges from about 0 percent to about 0.25 percent by weight.

Composite materials disclosed herein may have a measurable pore volume. Pore volume may be measured by any appropriate measurement technique now known to the skilled artisan or hereafter discovered. In one exemplary method, pore volume is measured with an AutoPore IV 9500 series mercury porosimeter from Micromeritics Instrument Corporation (Norcross, Georgia, USA), which can determine measure pore diameters ranging from 0.006 to 600 µm. As used to measure the pore volume of the composite materials disclosed herein, that porosimeter's contact angle was set at 130 degrees, and the pressure ranged from 0 to 227.5 MPa (0 to 33,000 psi). In some embodiments, the pore volume is about equal to at least one diatomaceous earth, perlite, and/or second mineral, from which it is made. In some embodiments, the pore volume ranges from about 1 mL/g to about 10 mL/g, from about 4 mL/g to about 8 mL/g, from about 5 mL/g to about 7 mL/g, or is about 6 mL/g.

Composite materials disclosed herein may have a measurable median pore diameter. Median pore diameter may be measured by any appropriate measurement technique now known to the skilled artisan or hereafter discovered. In one exemplary method, median pore diameter is measured with an AutoPore IV 9500 series mercury porosimeter, as described above. In some embodiments, the median pore diameter ranges from about 1 µm to about 40 µm. In some embodiments, the median pore diameter ranges from about 1 µm to about 8 µm. In some embodiments, the median pore diameter ranges from about 15 µm to about 30 µm. In some embodiments, the median pore diameter ranges from about 20 µm to about 30 µm.

Composite materials disclosed herein may have a measurable wet density, which as used herein refers to measurement of centrifuged wet density. According to one exemplary method, to measure wet density, a composite material sample of known weight from about 1.00 to about 2.00 g is placed in a calibrated 15 ml centrifuge tube to which deionized water is added to make up a volume of approximately 10 ml. The mixture is shaken thoroughly until all of the sample is wetted, and no powder remains. Additional deionized water is added around the top of the centrifuge tube to rinse down any mixture adhering to the side of the tube from shaking. The tube is centrifuged for 5 minutes at 2500 rpm on an IEC Centra^{®} MP-4R centrifuge, equipped with a Model 221 swinging bucket rotor (International Equipment Company; Needham Heights, Massachusetts, USA). Following centrifugation, the tube is carefully removed without disturbing the solids, and the level (i.e., volume) of the settled matter is measured in cm³. The centrifuged wet density of powder is readily calculated by dividing the sample weight by the measured volume. In some embodiments, the wet density ranges from about 160 kg/m³ (about 10 Ibs/ft³) to about 352 kg/m³ (about 22 Ibs/ft³). In some embodiments, the wet density ranges from about 160 kg/m³ (about 10 Ibs/ft³) to about 256 kg/m³ (about 16 Ibs/ft³), or from about 192 kg/m³ (about 12 Ibs/ft³) to about 304 kg/m³ (about 19 Ibs/ft³). In some embodiments, the filter aid has a bulk density ranging from about 112 kg/m³ (about 7 lb/ft³) to about 224 kg/m³ (about 14 Ib/ft³).

Composite materials disclosed herein may include at least one soluble metal. As used herein, the term "soluble metal" refers to any metal that may be dissolved in at least one liquid. Soluble metals are known to those of skill in the art and include, but are not limited to, iron, aluminum, calcium, vanadium, chromium, copper, zinc, nickel, cadmium, and mercury. When a filter aid including a composite material is used to filter at least one liquid, at least one soluble metal may dissociate from the composite material filter aid and enter the liquid. In many applications, such an increase in metal content of the liquid may be undesirable and/or unacceptable. For example, when a filter aid including a composite material is used to filter beer, a high level of iron dissolved in the beer from the filter aid may adversely affect sensory or other properties, including but not limited to taste and shelf-life.

Any appropriate protocol or test for measuring levels of at least one soluble metal in composite materials may be used, including those now known to the skilled artisan or hereafter discovered. For example, the brewing industry has developed at least one protocol to measure the beer soluble iron (BSI) of composite material filter aids. BSI refers to the iron content, which may be measured in parts per million, of a filter aid including a material that dissociates in the presence of a liquid, such as beer, as measured, for example, by the American Society of Brewing Chemists (ASBC). For example, the filter aid may have a BSI content of less than 5 ppm, or less than 1 ppm, as measured by ASBC. In the United States, ASBC has set forth a method to measure the BSI content in parts per million, wherein a sample of, e.g., BUDWEISER^{®} beer is contacted with the filter aid and the resulting iron content in the beer is measured.

In the ASBC method, for example, BSI content may be measured by placing a 5 g sample of diatomite in 200 mL of decarbonated beer (for example, BUDWEISER^{®}) at room temperature, and the mixture is swirled intermittently for an elapsed time of 5 minutes and 50 seconds. The mixture is then immediately transferred to a funnel containing 25 cm diameter filter paper, from which the filtrate collected during the first 30 seconds is discarded. Filtrate is collected for the next 150 seconds, and a 25 mL portion is treated with approximately 25 mg of ascorbic acid (i.e., C6H8O6) to reduce dissolved iron ions to the ferrous (i.e., Fe2+) state (thus yielding a "sample extract"). The color is developed by addition of 1 mL of 0.3 percent (w/v) 1,10-phenanthroline, and after 30 minutes, the absorbance of the resulting sample solution is compared to a standard calibration curve. The calibration curve is prepared from standard iron solutions of known concentration in beer. Untreated filtrate is used as a method blank to correct for turbidity and color. Absorbance is measured at 505 nm using a spectrophotometer.

In some embodiments, the beer soluble iron of the composite material disclosed herein ranges from less about 1 ppm to about 5 ppm, when measured using an ASBC method. In some embodiments, the beer soluble iron ranges from about 1 ppm to about 4 ppm, from about 1 ppm to about 2 ppm, or is less than about 1 ppm when measured using an ASBC method.

The European Beverage Convention (EBC) method for determining the beer soluble iron content contacts liquid potassium hydrogen phthalate with the filter aid and then analyzes the liquid for iron content. More specifically, the EBC method uses, for example, a 10 g/L solution of potassium hydrogen phthalate (KHP, KHC8H4O4) as the extractant along with a given quantity of filter aid material, with a total contact time of two hours. Extracts are then analyzed for iron concentration by the FERROZINE method.

In some embodiments, the beer soluble iron of composite material ranges from about 100 ppm to about 150 ppm, from about 100 ppm to about 120 ppm from about 110 ppm to about 120 ppm, about 20 ppm, about 80 ppm, or less than about 150 ppm, less than about 100 ppm, less than about 80 ppm, when measured using an EBC method.

The composite materials disclosed herein may have a measurable BET surface area. BET surface area, as used herein, refers to the technique for calculating specific surface area of physical absorption molecules according to Brunauer, Emmett, and Teller ("BET") theory. BET surface area may be measured by any appropriate measurement technique now known to the skilled artisan or hereafter discovered. In one exemplary method, BET surface area is measured with a Gemini III 2375 Surface Area Analyzer, using pure nitrogen as the sorbent gas, from Micromeritics Instrument Corporation (Norcross, Georgia, USA). In some embodiments, the BET surface area is greater than for a material not produced according to embodiments described herein (e.g., without co-agglomerating diatomaceous earth and perlite with at least one silica binder). In some embodiments, the BET surface area ranges from about 1 m²/g to about 50 m²/g, from about 5 m²/g to about 50 m²/g, or is greater than about 10 m²/g.

The exemplary composite materials disclosed herein may be used in any of a variety of processes, applications, and materials. For example, the composite materials may be used in at least one process, application, or material in which such a product with a high BET surface area is desirable.

The composite materials may be incorporated into a filter aid material or composition. A filter aid composition including at least one composite material may optionally include at least one additional filter aid medium. Examples of suitable additional filter aid media include, but are not limited to, natural or synthetic silicate or aluminosilicate materials, unimproved diatomaceous earth, saltwater diatomaceous earth, expanded perlite, pumicite, cellulose, rice hull ash, activated charcoal, feldspars, nepheline syenite, sepiolite, zeolite, mica, talk, clay, kaolin, smectite, wollastonite, and combinations thereof.

The at least one additional filter medium may be present in any appropriate amount. For example, the at least one additional filter medium may be present from about 0.01 to about 100 parts of at least one additional filter medium per part of the composite material. In some embodiments, the at least one additional filter medium is present from about 0.1 to about 10 parts. In some embodiments, the at least one additional filter medium is present from about 0.5 to 5 parts.

The filter aid composition may be formed into sheets, pads, cartridges, or other monolithic or aggregate media capable of being used as supports or substrates in a filter process. Considerations in the manufacture of filter aid compositions may include a variety of parameters, including but not limited to total soluble metal content of the composition, median soluble metal content of the composition, particle size distribution, pore size, cost, and availability.

A filter aid composition including at least one composite material with antimicrobial capability may be used in a variety of processes and compositions. In some embodiments, the filter aid composition is applied to a filter septum to protect it and/or to improve clarity of the liquid to be filtered in a filtration process. In some embodiments, the filter aid composition is added directly to a beverage to be filtered to increase flow rate and/or extend the filtration cycle. In some embodiments, the filter aid composition is used as pre-coating, in body feeding, or a combination of both pre-coating and body feeding, in a filtration process.

Embodiments of the composite material may also be used in a variety of filtering methods. In some embodiments, the filtering method includes pre-coating at least one filter element with at least one composite material, and contacting at least one liquid to be filtered with the at least one coated filter element. In such embodiments, the contacting may include passing the liquid through the filter element. In some embodiments, the filtering method includes suspending at least one composite material filter aid in at least one liquid containing particles to be removed from the liquid, and thereafter separating the filter aid from the filtered liquid.

Filter aids including at least one composite material disclosed herein may also be employed to filter various types of liquids. The skilled artisan is readily aware of liquids that may be desirably filtered with a process including the filter aids including at least composite material disclosed herein. In some embodiments, the liquid is a beverage. Exemplary beverages include, but are not limited to, vegetable-based juices, fruit juices, distilled spirits, and malt-based liquids. Exemplary malt-based liquids include, but are not limited to, beer and wine. In some embodiments, the liquid is one that tends to form haze upon chilling. In some embodiments, the liquid is a beverage that tends to form haze upon chilling. In some embodiments, the liquid is a beer. In some embodiments, the liquid is an oil. In some embodiments, the liquid is an edible oil. In some embodiments, the liquid is a fuel oil. In some embodiments, the liquid is water, including but not limited to waste water. In some embodiments, the liquid is blood. In some embodiments, the liquid is a sake. In some embodiments, the liquid is a sweetener, such as, for example, corn syrup or molasses.

The filtering method may remove or substantially eliminate bacteria from the filtered liquid. The method may remove or substantially eliminate bacteria from genera including, but not limited to, *Pediococcus, Lactobacillus, Acetobacter,* and *Oenococcus.* These bacteria are known to produce acetic acid from sugar, and for some species, even biogenic amines from free amino acids. It is also contemplated that the methods and devices of the present disclosure may remove or substantially eliminate other types of bacteria from the filtered liquids.

### EXAMPLES

The following examples are intended to illustrate the present disclosure without, however, being limiting in nature. It is understood that the present disclosure encompasses additional embodiments and embodiments consistent with the foregoing description and following examples.

### Preparation of a nano zinc oxide coated filter aid

A desired amount of zinc acetate (Table 1) was dissolved in water at room temperature. The pH of the zinc acetate solution was adjusted to about 6.3 by adding NaOH. The zinc acetate solution was then slowly added to 120 g or 200 g (as shown in the Table) of diatomaceous earth filter aid in a Hobart food mixer. Two commercial filter aid products were used as the feed materials: Celite Standard Super-cel from Lompoc deposit for Examples 1-5 and Celite Standard Super-cel from Murat deposit for Examples 6-10. After mixing for 15 minutes, the mixture was brushed through a 14 mesh screen with a 1.40 mm opening to disperse large lumps. The first screening through the 14 mesh screen may disperse wet large lumps. After drying in a 150°C oven overnight, the material was brushed through a 30 mesh (0.595 mm opening) screen. The second screening through the 30 mesh screen may break/remove dried large granules, which may be present in relatively small amounts. Zinc content in the antimicrobial filler was measured by inductively coupled plasma (ICP).

**Table 1: Antimicrobial filter aid sample preparation**

| **Example** | **Feed** | **Feed (g)** | **Zinc acetate (g)** | **Water (g)** | **Zn acetate (percent)** | **Zn by ICP (perc ent)** | **Permeabili ty (x10^{- 13}m²) (Darcy)** | **Wet density (kg/m³) (Ib/cf)** |
|---|---|---|---|---|---|---|---|---|
| Ex. 1 | Lompoc | 120 | 30.0 | 60 | 25 | | 2.57 (0.26) | 384.4 (24.0) |
| Ex. 2 | Lompoc | 120 | 24.0 | 60 | 20 | | 4.05 (0.41) | 363.6 (22.7) |
| Ex. 3 | Lompoc | 120 | 18.0 | 60 | 15 | | 4.34 (0.44) | 350.8 (21.9) |
| Ex. 4 | Lompoc | 120 | 12.0 | 60 | 10 | | 4.64 (0.47) | 328.4 (20.5) |
| Ex. 5 | Lompoc | 120 | 6.0 | 60 | 5 | | 4.64 (0.47) | 317.2 (19.8) |
| Ex. 6 | Murat | 200 | 50.0 | 60 | 25 | 6.74 | 2.57 (0.26) | 454.9 (28.4) |
| Ex. 7 | Murat | 200 | 40.0 | 60 | 20 | 5.56 | 6.32 (0.64) | 384.4 (24.0) |
| Ex. 8 | Murat | 200 | 30.0 | 60 | 15 | 4.20 | 5.82 (0.59) | 400.5 (25.0) |
| Ex. 9 | Murat | 200 | 20.0 | 60 | 10 | 2.83 | 5.92 (0.60) | 370.0 (23.1) |
| Ex. 10 | Murat | 200 | 10.0 | 60 | 5 | 1.46 | 6.12 (0.62) | 344.4 (21.5) |

### Anti-microbial testing

Malolactic Cultures from White Labs (San Diego, CA) were used to grow lactic acid bacteria in unfiltered apple juice solution. The juice solution was prepared using 25 percent (volume) DI water and 75 percent (volume) unfiltered apple juice. 35 mL of Malolactic Cultures was added to 250 mL of juice and water solution. The solution with Malolactic Cultures was then kept in a 30°C oven for 7 days for lactic acid bacteria growth.

For antibacterial treatment, 1 g of antimicrobial filter aid was added to 50 ml of the lactic acid bacteria solution and stirred for 30 minutes. The solution was then filtered through a 0.45 µm filter paper. The filtrate was sent out to a contract lab (EMSL Analytical, Inc.) for lactic acid bacteria measurement using petrifilm Aerobic Count (AC) Plates, a sample-ready culture medium system which contains standard methods nutrients, a cold-water-soluble gelling agent, and a tetrazolium indicator that facilitates colony enumeration.

### Anti-microbial test results

The results of the above-described test showed that lactic acid bacteria count was reduced by 96.5 percent after treatment with antimicrobial filter aid. Table 2 shows the lactic acid bacteria count when treated with the Example 6 filter aid sample, compared to the bacteria count for an untreated control solution.

**Table 2: Lactic Acid Bacteria Count**

| **Sample ID** | **Lactic Acid Bacteria Count (CFU/mL)** | **Bacterial Reduction (percent)** |
|---|---|---|
| Control (untreated) | 7.50E+07 | |
| Treated with Ex. 6 | 2.60E+06 | 96.5 |

### Preparation of a nano zinc oxide coated filler

Antimicrobial filler can be prepared using the same method as the antimicrobial filter aid. A commercial natural diatomite filler from Mexico with a median particle size of 14 microns was used as the feed material for nano zinc oxide coating in Examples 11 - 17 (Table 3). A commercial expanded perlite with a median particle size of 25 microns was used as the feed material in Example 18. Table 4 lists the particle size, Hunter scale L, a, b color data (The L value indicates the level of light or dark, the a-value indicates the level of redness or greenness, and the b-value indicates the level of yellowness or blueness), wet density and oil absorption of the antimicrobial diatomite and perlite fillers.

**Table 3: Antimicrobial filler sample preparation**

| **Example** | **Feed (g)** | **Zinc acetate (g)** | **Water (g)** | **Zn acetate (percent)** |
|---|---|---|---|---|
| Ex. 11 | 50 | 2.5 | 60 | 25 |
| Ex. 12 | 50 | 5.0 | 60 | 20 |
| Ex. 13 | 50 | 7.5 | 60 | 15 |
| Ex. 14 | 50 | 10.0 | 60 | 10 |
| Ex. 15 | 50 | 12.5 | 60 | 5 |
| Ex. 16 | 50 | 15.0 | 60 | 25 |
| Ex. 17 | 200 | 30 | 60 | 15 |
| Ex. 18 | 200 | 30 | 60 | 15 |

**Table 4: Physical properties of antimicrobial diatomite and perlite fillers**

| **Example** | **d₁₀ (µm)** | **d₅₀ (µm)** | **d₉₀ (µm)** | **L** | **a** | **b** | **Wet Density (kq/m³) (lb/ft)** | **Oil absorption (%)** |
|---|---|---|---|---|---|---|---|---|
| Ex. 17 (DE) | 6.58 | 13.39 | 29.59 | 91.19 | 0.42 | 4.93 | 253.1 (15.8) | 235 |
| Ex. 18 (Perlite) | 13.70 | 60.60 | 62.33 | 88.51 | 0.59 | 3.18 | 227.5 (14.2) | 231 |

Table 5 illustrates how *Streptococcus mutans* bacteria counts were affected by various zinc oxide coated diatomaceous earth preparations.

A direct bacterial killing experiment was done using spiral plating to measure the viability of the *Streptococcus mutans* UA159 (ATCC 700610) (S. *mutans). Streptococcus mutans* is facultative anaerobic, gram-positive coccus-shaped bacterium commonly found in the human oral cavity and is a significant contributor to tooth decay.

All of the tests on Examples 11-16 were measured blindly without any knowledge of their composition. This was accomplished by pipetting 1 ml of the diluted sample powder particles (100 mg/ml) into 3 ml of Tryptic Soy broth containing 1% sucrose (TSBS) and 20 µl of an overnight culture of S. *mutans.* The inoculated suspensions were incubated for 24 hours at 37°C in 5% CO₂, diluted 1:10 and 1:1000, and spiral plated onto blood agar plates. The colonies on the plates were counted in a Colony Forming Unit (CFU) after 24 hours of incubation. A 0.12% chlorhexidine (CHX) was used as a positive control, and sterile water was used as a negative control. Zinc content in the antimicrobial filler was measured by inductively coupled plasma (ICP).

**Table 5: Streptococcus mutans Bacteria Count**

| **Sample ID** | **Zn by ICP (percent)** | **Mean CFU/ml + SD** |
|---|---|---|
| Negative control (sterile water) | | 4.47 × 10⁷ + 0.12 |
| Positive control (Chlorhexidine) | | 1.27 × 10² + 0.021 |
| Natural DE filler | 0.00 | 6.02 × 10⁶ + 0.02 |
| Ex. 11 | 1.50 | 1.95 × 10⁷ + 0.03 |
| Ex. 12 | 2.89 | 1.54 × 10⁷ + 0.03 |
| Ex. 13 | 4.03 | 1.64 × 10⁷ + 0.03 |
| Ex. 14 | 5.49 | 1.95 × 10⁵ + 0.03 |
| Ex. 15 | 6.60 | 2.03 × 10² + 0 |
| Ex. 16 | 7.82 | 0 |

As shown in Table 5, *Streptococcus mutans* bacteria can be significantly reduced by the antimicrobial filler. The reduction (killing) of bacteria increases with increasing zinc content in the antimicrobial filler. At 6.6% zinc, the antimicrobial effect is the same as the negative control of chlorhexidine. All bacteria are killed when zinc content is at 7.82%.

Similar to zinc acetate, zinc sulfate solution with various zinc sulfate concentrations can also be used to make zinc and diatomite composite materials using the similar method for the zinc acetate (Table 6). A natural Mexican DE with a median particle size of 14 microns was used as feed material. After coating, the coated materials were dried/heat-treated at 120°C to 300°C.

**Table 6: Antimicrobial DE using zinc sulfate as starting material**

| **Example** | **Natural DE (g)** | **Zn(SO₄) Solution (g)** | **Zn(SO₄) (wt%)** | **Temperature (°C)** |
|---|---|---|---|---|
| Ex. 19 | 200 | 20 | 3 | 120 |
| Ex. 20 | 200 | 20 | 3 | 300 |
| Ex.21 | 200 | 40 | 6 | 120 |
| Ex. 22 | 200 | 40 | 6 | 300 |
| Ex.23 | 200 | 80 | 12 | 120 |
| Ex. 24 | 200 | 80 | 12 | 300 |

### Perlite and zinc oxide/titanium oxide composites for sunscreen (not of the invention) and other applications

A commercial perlite product with a mean particle size of 20 µm was mixed with a commercial zinc oxide product such as Akrochem XF-11 with a mean particle size of 0.11 µm in a Hobart food mixer according to the mixing ratio in Table 7.

3 g of sodium silicate was dispersed in 20 g of DI water and then slowly added to the mixture of perlite and zinc oxide in the Hobart food mixer. After mixing with sodium silicate solution for 15 minutes, the mixture was dried in a 150°C oven overnight. The dried material was then brushed through a 30 mesh (0.6 mm opening) screen.

**Table 7: Sunscreen Compositions (not of the invention)**

| **Example** | **Perlite (g)** | **Zinc oxide g)** | **Sodium silicate (g)** | **Water (g)** |
|---|---|---|---|---|
| Ex. 25 | 40 | 60 | 3 | 20 |
| Ex. 26 | 50 | 50 | 3 | 20 |
| Ex. 27 | 10 | 90 | 3 | 20 |

The same procedure was used to prepare perlite and titanium oxide composites. A commercial titanium oxide such as Ti-Pure^{™} R-900 rutile titanium oxide with a mean particle size of 0.41 µm was used. A sample with 10 g perlite and 90 g of titanium oxide was prepared. The same procedures can also be used to prepare DE and zinc oxide/titanium oxide for other applications.

### Calcined zinc oxide and DE composites

Zinc and DE composites can also be prepared by calcination of the DE with zinc oxide at high temperature. A natural DE from Lompoc with a median particle size of 20 microns was used as feed material. A desired amount of DE and zinc oxide was mixed homogenously and then placed in a ceramic boat and calcined at high temperature in a muffle furnace (Table 8).

**Table 8: Calcined DE and zinc oxide composites.**

| **Examples** | **DE (g)** | **ZnO (g)** | **Temperature (°C)** |
|---|---|---|---|
| Ex.28 | 5.0 | 0.3 | 850 |
| Ex. 29 | 5.0 | 0.5 | 850 |

### Calcined and flux calcined zinc oxide and DE/perlite composites

Zinc and DE/perlite composites can also be prepared by calcination of the DE/perlite composites with zinc oxide at high temperature. A natural DE from Nouvelle with a median particle size of 15 microns and an expanded perlite with a median particle size of 40 microns were used as feed materials. A desired amount of DE and perlite mixture and zinc oxide were mixed homogenously and then placed in a ceramic boat and calcined at high temperature in a muffle furnace (Table 9). For Examples 36 and 37, sodium carbonate was added as flux for high temperature calcination.

**Table 9. Calcined DE and zinc oxide composites.**

| **Examples** | **DE (g)** | **Perlite (q)** | **ZnO (q)** | **Na₂CO₃ (q)** | **Temperature (°C)** |
|---|---|---|---|---|---|
| Ex. 30 | 3.0 | 7.0 | 0.5 | 0 | 850 |
| Ex.31 | 3.0 | 7.0 | 1.0 | 0 | 850 |
| Ex.32 | 3.0 | 7.0 | 1.5 | 0 | 850 |
| Ex.33 | 3.0 | 7.0 | 1.5 | 0 | 950 |
| Ex.34 | 3.0 | 7.0 | 1.5 | 0 | 1050 |
| Ex. 35 | 3.0 | 7.0 | 2.0 | 0 | 850 |
| Ex. 36 | 3.0 | 7.0 | 0.5 | 0.5 | 850 |
| Ex.37 | 3.0 | 7.0 | 1.0 | 0.5 | 850 |

### Preparation of nano zinc oxide coated filter aids comprising perlite

As further examples, summarized in Table 10 below, desired amounts of zinc acetate were dissolved in water, added to a filter aid comprising perlite, and tested for permeability and wet density. The methods of example preparation and testing are consistent with those used to determine the data listed in Table 1 above. As these examples illustrate, adding the zinc oxide to different filter aid feeds results in permeability and wet density values that may be desirable for particular filtering applications.

**Table 10: Antimicrobial filter aid sample preparation**

| **Example** | **Feed** | **Feed (g)** | **Zinc acetate (g)** | **Water (g)** | **Zn acetate (percent age)** | **Permea bility (×10⁻¹² m²) (Darcy)** | **Wet Density (kg/m³) (Ib/cf)** |
|---|---|---|---|---|---|---|---|
| Ex. 38 | Haborlite 900S | 120 | 30 | 60 | 25 | 2.09 (2.12) | 330.46 (20.63) |
| Ex. 39 | Haborlite 900S | 120 | 24 | 60 | 20 | 2.63 (2.66) | 321.81 (20.09) |
| Ex. 40 | Haborlite 900S | 120 | 18 | 60 | 15 | 2.79 (2.83) | 302.11 (18.86) |
| Ex. 41 | Haborlite 900S | 120 | 12 | 60 | 10 | 3.37 (3.41) | 278.88 (17.41) |
| Ex. 42 | Haborlite 900S | 120 | 6 | 60 | 5 | 3.40 (3.45) | 281.93 (17.60) |

Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

## Claims

1. A composite filter aid, comprising:
a mineral associated with an antimicrobial metal compound, wherein the filter aid has a permeability ranging from 9.86 × 10⁻¹⁴ m² to 1.97 × 10⁻¹¹ m² (0.1 to 20 darcys), further wherein the mineral includes one or more of diatomaceous earth and perlite.

2. The composite filter aid of claim 1, wherein the filter aid has a permeability ranging from 4.93 × 10⁻¹³ m² to 1.97 × 10⁻¹² m² (0.5 to 2 darcys), or
wherein the filter aid has a permeability ranging from 1.97 × 10⁻¹² m² to 1.97 × 10⁻¹¹ m² (2 to 20 darcys), or
wherein the filter aid has a permeability ranging from 1.97 × 10⁻¹² m² to 9.87 × 10⁻¹² m² (2 to 10 darcys), or
wherein the filter aid has a permeability ranging from 1.97 × 10⁻¹² m² to 4.93 × 10⁻¹² m² (2 to 5 darcys).

3. The composite filter aid of any one of claims 1-2, wherein a ratio of the antimicrobial metal compound to the mineral ranges from 1:1000 to 1:4 by weight, or
wherein a ratio of the antimicrobial metal compound to the mineral ranges from 1:100 to 1:5 by weight, or
wherein a ratio of the antimicrobial metal compound to the mineral ranges from 1:100 to 1:10 by weight, or
wherein a ratio of the antimicrobial metal compound to the mineral ranges from 1:20 to 1:5 by weight, or
wherein a ratio of the antimicrobial metal compound to the mineral ranges from 1:20 to 3:20 by weight.

4. The composite filter aid of any one of the preceding claims, wherein the antimicrobial metal compound includes at least one of zinc, copper, and silver.

5. The composite filter aid of any one of the preceding claims, wherein the antimicrobial metal compound includes zinc oxide and optionally
wherein the zinc content in the composite filter aid is more than 1.00 % or zinc oxide content is more than 1.24%, or
wherein the zinc content in the composite filter aid is more than 3.00 % or zinc oxide content is more than 3.73%, or
wherein the zinc content in the composite filter aid is more than 5.00 % or zinc oxide content is more than 6.22%, or
wherein the zinc content in the composite filter aid is more than 6.00 % or zinc oxide content is more than 7.47%, or
wherein the zinc content in the composite filter aid is more than 8.00 % or zinc oxide content is more than 9.96%, or
wherein the zinc content in the composite filter aid is more than 10.00 % or zinc oxide content is more than 12.45%.

6. The composite filter aid of any one of the preceding claims, wherein the antimicrobial metal compound includes antimicrobial metal compound particles, and wherein the antimicrobial metal compound particles are attached to a surface of the mineral and optionally
wherein the antimicrobial metal compound particles have a particle size less than 200 nm, or
wherein the antimicrobial metal compound particles have a particle size less than 150 nm, or
wherein the antimicrobial metal compound particles have a particle size less than 100 nm, or
wherein the antimicrobial metal compound particles have a particle size less than 50 nm, or
wherein the antimicrobial metal compound particles have a particle size less than 25 nm, or
wherein the antimicrobial metal compound particles have a particle size less than 20 nm, or
wherein the antimicrobial metal compound particles have a particle size less than 15 nm, or
wherein the antimicrobial metal compound particles have a particle size less than 10 nm, or
wherein the antimicrobial metal compound particles have a particle size less than 5 nm.

7. The composite filter aid of any one of the preceding claims, wherein the mineral includes diatomaceous earth.

8. The composite filter aid of claim 7, wherein the diatomaceous earth has a d₁₀ ranging from 5 µm to 20 µm, or
wherein the diatomaceous earth has a median particle size (d₅₀) ranging from 15 µm to 50 µm, or
wherein the diatomaceous earth has a top particle size (d₉₀) ranging from 40 µm to 120 µm, or
wherein the diatomaceous earth has a pore volume ranging from about 2 ml/g to about 4 ml/g, or
wherein the diatomaceous earth has a median pore diameter ranging from about 1 µm to about 6 µm, or
wherein the diatomaceous earth has a bulk density ranging from about 64 kg/m³ to about 240 kg/m³ (about 4 Ib/ft³ to about 15 Ib/ft³).

9. The composite filter aid of claim 7, wherein the diatomaceous earth is non-calcined, or
wherein the diatomaceous earth is calcined, or
wherein the diatomaceous earth is flux-calcined.

10. The composite filter aid of any one of claims 1-6, wherein the mineral is perlite, optionally wherein the perlite includes expanded perlite, or
wherein the perlite includes milled, expanded perlite, or
wherein the perlite includes unexpanded perlite.

11. The composite filter aid of claim 10, wherein the perlite has a median particle size (d₅₀) ranging from 5 µm to 25 µm, or
wherein the perlite has a median particle size (d₅₀) ranging from 10 µm to 70 µm.

12. The composite filter aid of any one of claims 1-6, wherein the mineral includes at least one of kaolin, talc, vermiculite, mica, and wollastonite.

13. The composite filter aid of any one of the preceding claims, wherein the filter aid has a beer soluble iron content of less than 5 ppm, as measured by ASBC, or
wherein the filter aid has a beer soluble iron content of less than 1 ppm, as measured by ASBC.

14. The composite filter aid of any one of the preceding claims, wherein the filter aid has a cristobalite content of less than 20 percent by weight, or
wherein the filter aid has a cristobalite content of less than 10 percent by weight, or
wherein the filter aid has a cristobalite content of less than 6 percent by weight, or
wherein the filter aid has a cristobalite content of less than 1 percent by weight.

15. A method of filtering a fluid with the filter aid of any one of the preceding claims, for example
wherein the fluid is a beverage such as beer, wine, or juice, or wherein the fluid is oil such as edible oil or biodiesel.

## Patentansprüche

1. Verbundfilterhilfsmittel, umfassend:
ein Mineral, das mit einer antimikrobiellen Metallverbindung assoziiert ist, wobei das Filterhilfsmittel eine Permeabilität in einem Bereich von 9,86 × 10⁻¹⁴ m² bis1,97 × 10⁻¹¹ m² (0,1 bis 20 darcys) aufweist, wobei das Mineral ferner eines oder mehrere von Diatomeenerde und Perlit beinhaltet.

2. Verbundfilterhilfsmittel gemäß Anspruch 1, wobei das Filterhilfsmittel eine Permeabilität in einem Bereich von 4,93 × 10⁻¹³ m² bis 1,97 × 10⁻¹² m² (0,5 bis 2 Darcys) aufweist, oder
wobei das Filterhilfsmittel eine Permeabilität in einem Bereich von 1,97 × 10⁻¹² m² bis 1,97 × 10⁻¹¹ m² (2 bis 20 Darcys) aufweist, oder
wobei das Filterhilfsmittel eine Permeabilität in einem Bereich von 1,97 × 10⁻¹² m² bis 9,87 × 10⁻¹² m² (2 bis 10 Darcys) aufweist, oder
wobei das Filterhilfsmittel eine Permeabilität in einem Bereich von 1,97 × 10⁻¹² m² bis 4,93 × 10⁻¹² m² (2 bis 5 Darcys) aufweist.

3. Verbundfilterhilfsmittel gemäß einem der Ansprüche 1-2, wobei ein Verhältnis der antimikrobiellen Metallverbindung zu dem Mineral in einem Bereich von 1:1000 bis 1:4 nach Gewicht ist, oder
wobei ein Verhältnis der antimikrobiellen Metallverbindung zu dem Mineral in einem Bereich von 1:100 bis 1:5 nach Gewicht ist, oder
wobei ein Verhältnis der antimikrobiellen Metallverbindung zu dem Mineral in einem Bereich von 1:100 bis 1:10 nach Gewicht ist, oder
wobei ein Verhältnis der antimikrobiellen Metallverbindung zu dem Mineral in einem Bereich von 1:20 bis 1:5 nach Gewicht ist, oder
wobei ein Verhältnis der antimikrobiellen Metallverbindung zu dem Mineral in einem Bereich von 1:20 bis 3:20 nach Gewicht ist.

4. Verbundfilterhilfsmittel gemäß einem der vorherigen Ansprüche, wobei die antimikrobielle Metallverbindung mindestens eines von Zink, Kupfer und Silber beinhaltet.

5. Verbundfilterhilfsmittel gemäß einem der vorherigen Ansprüche, wobei die antimikrobielle Metallverbindung Zinkoxid beinhaltet und optional
wobei der Zinkgehalt in dem Verbundfilterhilfsmittel mehr als 1,00 % ist oder der Zinkoxidgehalt mehr als 1,24 % ist, oder
wobei der Zinkgehalt in dem Verbundfilterhilfsmittel mehr als 3,00 % ist oder der Zinkoxidgehalt mehr als 3,73 % ist, oder
wobei der Zinkgehalt in dem Verbundfilterhilfsmittel mehr als 5,00 % ist oder der Zinkoxidgehalt mehr als 6,22 % ist, oder
wobei der Zinkgehalt in dem Verbundfilterhilfsmittel mehr als 6,00 % ist oder der Zinkoxidgehalt mehr als 7,47 % ist, oder
wobei der Zinkgehalt in dem Verbundfilterhilfsmittel mehr als 8,00 % ist oder der Zinkoxidgehalt mehr als 9,96 % ist, oder
wobei der Zinkgehalt in dem Verbundfilterhilfsmittel mehr als 10,00 % ist oder der Zinkoxidgehalt mehr als 12,45 % ist, oder

6. Verbundfilterhilfsmittel gemäß einem der vorherigen Ansprüche, wobei die antimikrobielle Metallverbindung antimikrobielle Metallverbindungspartikel beinhaltet und wobei die antimikrobiellen Metallverbindungspartikel an eine Oberfläche des Minerals gebunden sind und optional
wobei die antimikrobiellen Metallverbindungspartikel eine Partikelgröße von weniger als 200 nm aufweisen, oder
wobei die antimikrobiellen Metallverbindungspartikel eine Partikelgröße von weniger als 150 nm aufweisen, oder
wobei die antimikrobiellen Metallverbindungspartikel eine Partikelgröße von weniger als 100 nm aufweisen, oder
wobei die antimikrobiellen Metallverbindungspartikel eine Partikelgröße von weniger als 50 nm aufweisen, oder
wobei die antimikrobiellen Metallverbindungspartikel eine Partikelgröße von weniger als 25 nm aufweisen, oder
wobei die antimikrobiellen Metallverbindungspartikel eine Partikelgröße von weniger als 20 nm aufweisen, oder
wobei die antimikrobiellen Metallverbindungspartikel eine Partikelgröße von weniger als 15 nm aufweisen, oder
wobei die antimikrobiellen Metallverbindungspartikel eine Partikelgröße von weniger als 10 nm aufweisen, oder
wobei die antimikrobiellen Metallverbindungspartikel eine Partikelgröße von weniger als 5 nm aufweisen.

7. Verbundfilterhilfsmittel gemäß einem der vorherigen Ansprüche, wobei das Mineral Diatomeenerde beinhaltet.

8. Verbundfilterhilfsmittel gemäß Anspruch 7, wobei die Diatomeenerde einen d₁₀ in einem Bereich von 5 µm bis 20 µm aufweist, oder
wobei die Diatomeenerde eine mittlere Partikelgröße (dso) in einem Bereich von 15 µm bis 50 µm aufweist, oder
wobei die Diatomeenerde eine obere Partikelgröße (d₉₀) in einem Bereich von 40 µm bis 120 µm aufweist, oder
wobei die Diatomeenerde ein Porenvolumen in einem Bereich von etwa 2 ml/g bis etwa 4 ml/g aufweist, oder
wobei die Diatomeenerde einen mittleren Porendurchmesser in einem Bereich von etwa 1 µm bis etwa 6 µm aufweist, oder
wobei die Diatomeenerde eine Schüttdichte in einem Bereich von etwa 64 kg/m³ bis etwa 240 kg/m³ (etwa 4 Ib/ft³ bis etwa 15 lb/ft³) aufweist.

9. Verbundfilterhilfsmittel gemäß Anspruch 7, wobei die Diatomeenerde nicht kalziniert ist, oder wobei die Diatomeenerde kalziniert ist, oder
wobei die Diatomeenerde flusskalziniert ist.

10. Verbundfilterhilfsmittel gemäß einem der Ansprüche 1 bis 6, wobei das Mineral Perlit ist, wobei das Perlit optional expandiertes Perlit beinhaltet, oder
wobei das Perlit gemahlenes, expandiertes Perlit beinhaltet, oder wobei das Perlit nicht expandiertes Perlit beinhaltet.

11. Verbundfilterhilfsmittel gemäß Anspruch 10, wobei das Perlit eine mittlere Partikelgröße (dso) in einem Bereich von 5 µm bis 25 µm aufweist, oder
wobei das Perlit eine mittlere Partikelgröße (dso) von 10 µm bis 70 µm aufweist.

12. Verbundfilterhilfsmittel gemäß einem der Ansprüche 1 bis 6, wobei das Mineral mindestens eines von Kaolin, Talk, Vermiculit, Glimmer und Wollastonit beinhaltet.

13. Verbundfilterhilfsmittel gemäß einem der vorherigen Ansprüche, wobei das Filterhilfsmittel einen Gehalt an bierlöslichem Eisen von weniger als 5 ppm, gemessen durch ASBC, aufweist, oder
wobei das Filterhilfsmittel einen Gehalt an bierlöslichem Eisen von weniger als 1 ppm, gemessen durch ASBC, aufweist.

14. Verbundfilterhilfsmittel gemäß einem der vorherigen Ansprüche, wobei das Filterhilfsmittel einen Cristobalit-Gehalt von weniger als 20 Gewichtsprozent aufweist, oder
wobei das Filterhilfsmittel einen Cristobalit-Gehalt von weniger als 10 Gewichtsprozent aufweist, oder wobei das Filterhilfsmittel einen Cristobalit-Gehalt von weniger als 6 Gewichtsprozent aufweist, oder wobei das Filterhilfsmittel einen Cristobalit-Gehalt von weniger als 1 Gewichtsprozent aufweist.

15. Verfahren zum Filtrieren eines Fluids mit dem Filterhilfsmittel gemäß einem der vorherigen Ansprüche, zum Beispiel
wobei das Fluid ein Getränk, wie beispielsweise Bier, Wein oder Saft ist, oder wobei die Flüssigkeit Öl, wie beispielsweise Speiseöl oder Biodiesel ist.

## Revendications

1. Un adjuvant de filtration composite, comprenant :
un minéral associé à un composé métallique antimicrobien, dans lequel l'adjuvant de filtration a une perméabilité comprise entre 9,86 × 10⁻¹⁴ m² et 1,97 × 10⁻¹¹ m² (0,1 à 20 darcys), et dans lequel le minéral comprend une ou plusieurs parmi la terre de diatomées et la perlite.

2. L'adjuvant de filtration composite selon la revendication 1, dans lequel l'adjuvant de filtration a une perméabilité comprise entre 4,93 × 10⁻¹³ m² et 1,97 × 10⁻¹² m² (0,5 à 2 darcys), ou
dans lequel l'adjuvant de filtration a une perméabilité comprise entre 1,97 × 10⁻¹² m² et 1,97 × 10⁻¹¹ m² (2 à 20 darcys), ou
dans lequel l'adjuvant de filtration a une perméabilité comprise entre 1,97 × 10⁻¹² m² et 9,87 × 10⁻¹² m² (2 à 10 darcys), ou
dans lequel l'adjuvant de filtration a une perméabilité comprise entre 1,97 × 10⁻¹² m² et 4,93 × 10⁻¹² m² (2 à 5 darcys).

3. L'adjuvant de filtration composite selon l'une quelconque des revendications 1 à 2, dans lequel le rapport entre le composé métallique antimicrobien et le minéral est compris entre 1:1000 et 1:4 en poids, ou
dans lequel le rapport entre le composé métallique antimicrobien et le minéral est compris entre 1:100 et 1:5 en poids, ou
dans lequel le rapport entre le composé métallique antimicrobien et le minéral est compris entre 1:100 et 1:10 en poids, ou
dans lequel le rapport entre le composé métallique antimicrobien et le minéral est compris entre 1:20 et 1:5 en poids, ou
dans lequel le rapport entre le composé métallique antimicrobien et le minéral est compris entre 1:20 et 3:20 en poids.

4. L'adjuvant de filtration composite selon l'une quelconque des revendications précédentes, dans lequel le composé métallique antimicrobien comprend au moins un parmi le zinc, le cuivre, et l'argent.

5. L'adjuvant de filtration composite selon l'une quelconque des revendications précédentes, dans lequel le composé métallique antimicrobien comprend de l'oxyde de zinc et éventuellement
dans lequel la teneur en zinc de l'adjuvant de filtration composite est supérieure à 1,00 % ou la teneur en oxyde de zinc est supérieure à 1,24 %, ou
dans lequel la teneur en zinc de l'adjuvant de filtration composite est supérieure à 3,00 % ou la teneur en oxyde de zinc est supérieure à 3,73 %, ou
dans lequel la teneur en zinc de l'adjuvant de filtration composite est supérieure à 5,00 % ou la teneur en oxyde de zinc est supérieure à 6,22 %, ou
dans lequel la teneur en zinc de l'adjuvant de filtration composite est supérieure à 6,00 % ou la teneur en oxyde de zinc est supérieure à 7,47 %, ou
dans lequel la teneur en zinc de l'adjuvant de filtration composite est supérieure à 8,00 % ou la teneur en oxyde de zinc est supérieure à 9,96 %, ou
dans lequel la teneur en zinc de l'adjuvant de filtration composite est supérieure à 10,00 % ou la teneur en oxyde de zinc est supérieure à 12,45 %.

6. L'adjuvant de filtration composite selon l'une quelconque des revendications précédentes, dans lequel le composé métallique antimicrobien comprend des particules de composé métallique antimicrobien, et dans lequel les particules de composé métallique antimicrobien sont fixées à une surface du minéral et éventuellement
dans lequel les particules de composé métallique antimicrobien ont une granulométrie inférieure à 200 nm, ou
dans lequel les particules de composé métallique antimicrobien ont une granulométrie inférieure à 150 nm, ou
dans lequel les particules de composé métallique antimicrobien ont une granulométrie inférieure à 100 nm, ou
dans lequel les particules de composé métallique antimicrobien ont une granulométrie inférieure à 50 nm, ou
dans lequel les particules de composé métallique antimicrobien ont une granulométrie inférieure à 25 nm, ou
dans lequel les particules de composé métallique antimicrobien ont une granulométrie inférieure à 20 nm, ou
dans lequel les particules de composé métallique antimicrobien ont une granulométrie inférieure à 15 nm, ou
dans lequel les particules de composé métallique antimicrobien ont une granulométrie inférieure à 10 nm, ou
dans lequel les particules de composé métallique antimicrobien ont une granulométrie inférieure à 5 nm.

7. L'adjuvant de filtration composite selon l'une quelconque des revendications précédentes, dans lequel le minéral comprend de la terre de diatomées.

8. L'adjuvant de filtration composite selon la revendication 7, dans lequel la terre de diatomées a un d₁₀ compris entre 5 µm et 20 µm, ou
dans lequel la terre de diatomées a une granulométrie médiane (dso) comprise entre 15 µm et 50 µm, ou
dans lequel la terre de diatomées a une granulométrie supérieure (d₉₀) comprise entre 40 µm et 120 µm, ou
dans lequel la terre de diatomées a un volume de pores compris entre environ 2 ml/g et environ 4 ml/g, ou
dans lequel la terre de diatomées a un diamètre de pores médian compris entre environ 1 µm et environ 6 µm, ou
dans lequel la terre de diatomées a une densité apparente comprise entre environ 64 kg/m³ et environ 240 kg/m³ (environ 4 lb/pi³ et environ 15 lb/pi³).

9. L'adjuvant de filtration composite selon la revendication 7, dans lequel la terre de diatomées est non calcinée, ou
dans lequel la terre de diatomées est calcinée, ou
dans lequel la terre de diatomées est calcinée par flux.

10. L'adjuvant de filtration composite selon l'une quelconque des revendications 1 à 6, dans lequel le minéral est de la perlite, éventuellement dans lequel la perlite comprend de la perlite expansée, ou
dans lequel la perlite comprend de la perlite expansée broyée, ou
dans lequel la perlite comprend de la perlite non expansée.

11. L'adjuvant de filtration composite selon la revendication 10, dans lequel la perlite a une granulométrie médiane (dso) comprise entre 5 µm et 25 µm, ou dans lequel la perlite a une granulométrie médiane (dso) comprise entre 10 µm et 70 µm.

12. L'adjuvant de filtration composite selon l'une quelconque des revendications 1 à 6, dans lequel le minéral comprend au moins un parmi le kaolin, le talc, la vermiculite, le mica, et la wollastonite.

13. L'adjuvant de filtration composite selon l'une quelconque des revendications précédentes, dans lequel l'adjuvant de filtration a une teneur en fer soluble dans la bière de moins de 5 ppm, telle que mesurée par l'ASBC, ou
dans lequel l'adjuvant de filtration a une teneur en fer soluble dans la bière inférieure à 1 ppm, telle que mesurée par l'ASBC.

14. L'adjuvant de filtration composite selon l'une quelconque des revendications précédentes, dans lequel l'adjuvant de filtration a une teneur en cristobalite inférieure à 20 pour cent en poids, ou
dans lequel l'adjuvant de filtration a une teneur en cristobalite inférieure à 10 pour cent en poids, ou
dans lequel l'adjuvant de filtration a une teneur en cristobalite inférieure à 6 pour cent en poids, ou
dans lequel l'adjuvant de filtration a une teneur en cristobalite inférieure à 1 pour cent en poids.

15. Un procédé de filtration d'un fluide avec l'adjuvant de filtration selon l'une quelconque des revendications précédentes, par exemple
dans lequel le fluide est une boisson telle que de la bière, du vin, ou du jus, ou dans lequel le fluide est une huile telle qu'une huile comestible ou du biodiesel.
